# EUROPÄISCHE PATENTANMELDUNG

(11) **EP 0 731 064 A2**
(43) Veröffentlichungstag der Anmeldung: **11.09.1996**
(21) Anmeldenummer: 96103099.6
(22) Anmeldetag: 01.03.1996
(51) Int. Cl.: C04B 18/18

(54) **Aufarbeitung und Verwendung der Rückstände der Direkten Synthese von Organochlor- u./o. Chlorsilanen**

(30) Priorität: 04.03.1995 DE 19507602
(71) Anmelder: Hüls Silicone Gesellschaft mit beschränkter Haftung, D-01610 Nünchritz (DE)
(72) Erfinder: Brumme, Johannes, Dr. rer. nat., 01169 Dresden (DE); Nürnberg, Peter, Dr. rer. nat., 01612 Diesbar-Seusslitz (DE); Tamme, Gudrun, 01468 Boxdorf (DE)
(74) Vertreter: Zöllner, Gudrun

(57) **Zusammenfassung**

Die Erfindung betrifft die Aufarbeitung und Verwendung der Rückstände der Direkten Synthese von Organochlor- und/oder Chlorsilanen, die hauptsächlich als Reaktorrückstände, Filterstäube und Hochsieder- oder Hydrolyseschlämme bei der technischen Umsetzung von Siliciummetall mit Organochloriden oder Chlorwasserstoff anfallen.

## Beschreibung

Die Erfindung betrifft die Aufarbeitung und Verwendung der Rückstände der Direkten Synthese von Organochlor- und/oder Chlorsilanen, die hauptsächlich als Reaktorrückstände, Filterstäube und Hochsieder- oder Hydrolyseschlämme bei der technischen Umsetzung von Siliciummetall mit Organochloriden oder Chlorwasserstoff anfallen.

Bei der Herstellung von Organochlorsilanen durch kupferkatalysierte Umsetzung von Alkyl- oder Arylchloriden mit technischem Siliciummetall, insbesondere bei der Herstellung von Methylchlorsilanen nach der dem Fachmann bekannten Müller-Rochow-Synthese sowie bei der Herstellung von Chlorsilanen durch Hydrochlorierung von technischem Siliciummetall werden an verschiedenen Stellen des Prozesses feste und flüssige Rückstände erhalten.

Feinkörnige Bestandteile, die mit dem Produktstrom ausgetragen werden, fallen z. B. in Filteranlagen oder als Schlämme vor bzw. nach der hydrolytischen Aufarbeitung der hochsiedenden Destillationsrückstände an. Der in den Reaktoren verbleibende Teil der sogenannten Kontaktmasse wird nach Erreichen eines bestimmten Abarbeitungsgrades ausgetauscht.

Alle diese Rückstände enthalten neben Silicium die Bestandteile des Katalysatorsystems sowie die im technischen Siliciummetall enthaltenen Begleitelemente, wie z.B. Eisen, Aluminium oder Calcium, in angereicherter Form. Außerdem können sie mit den Produkten der Direkten Synthesen behaftet sein.

Diese Rückstände sind ohne Aufarbeitung praktisch unbrauchbar und lassen sich auf Grund der vielfältigen Bestandteile nur unter erheblichem ökonomischen Aufwand entsorgen, wobei das Ziel der meisten publizierten Arbeiten die gefahrlose Deponierung der inertisierten Reststoffe ist.

In der US-Patentschrift 5 126 203 wird ein Verfahren beschrieben, das die Herstellung von gepreßten Formkörpern (Pellets) aus abgearbeiteter Kontaktmasse der Direkten Synthese zum Ziel hat, die gegen Feuchtigkeit und atmosphärischen Sauerstoff geschützt sind und damit sicher zu einer Deponie transportiert und dort endgelagert werden können. Dazu wird dem Kontaktmassen-Pulver, das bekanntermaßen in Gegenwart von Luftsauerstoff und Feuchtigkeit zu exothermen Reaktionen neigt, vor dem Verpressen ein organischer Binder, vorzugsweise Lignin, beigemischt. Trotz dieser Versiegelung der einzelnen Partikel sind mit der atmosphärischen Umgebung noch Reaktionen möglich, bei denen die Temperatur bis auf 50 ^{o}C ansteigen kann. Weitere Nachteile dieses Verfahrens sind, daß
* trotz der aufwendigen Behandlung nur eine Entsorgung auf einer Deponie erfolgen kann,
* bei der Behandlung mit im Beispiel beschriebener Natrium-Wasserglas-Lösung aufgrund der hohen Basizität dieser Verbindung mit einer verstärkten Wasserstoff-Bildung zu rechnen ist, da der Fachwelt bekannt ist, daß bereits bei der Einwirkung von verdünnten alkalischen Lösungen auf (zerkleinertes) Siliciummetall sehr leicht Wasserstoff entsteht (s. W. Trzebiatowski, Lehrbuch der Anorganischen Chemie, Deutscher Verlag der Wissenschaften, Berlin 1969, Seite 347),
* durch die Beimengung von organischen Verbindungen mit oder ohne Lösungsmittel eine Verwertung durch thermische Verfahren von vornherein ausgeschlossen oder zumindest nur sehr aufwendig möglich ist,
* aufgrund der dem Fachmann bekannten speziellen Beimischungen der abgearbeiteten Kontaktmasse die Oberfläche der Siliciumteilchen weder eine Affinität zu Wasser noch zu anorganischen und organischen Verbindungen besitzt, so daß eine ausreichende mechanische Festigkeit der so hergestellten Formkörper in Frage gestellt wer den muß.

Der Verbleib der restlichen Bestandteile der verwendeten Kontaktmasse wird nicht beschrieben.

Andere Verfahren beschreiben das Granulieren ausschließlich der festen, feinkörnigen Reststoffe (EP 201 199), wobei inerte anorganische Materialien als Hilfsstoffe eingesetzt werden. Eine gleichzeitige Verwertung der anhaftenden hochsiedenden Beiprodukte der Direkten Synthesen ist jedoch nach diesem Verfahren nicht möglich.

Im US 5 274 158 erfolgt die Inertisierung der verbrauchten Kontaktmasse durch eine thermische Behandlung bei Temperaturen von 900 bis 1000 °C.

US 5 000 934 beschreibt die Behandlung der verbrauchten Kontaktmasse bei Temperaturen von 50 bis 100 °C in Gegenwart von Basen bei einem pH-Wert von 10,0 bis 14,0.

Aufgabe der Erfindung war das Auffinden eines Verfahrens, das es ermöglicht, bei technologisch einfacher Durchführung und unter milden Bedingungen, insbesondere die festen, metallhaltigen und/oder flüssigen, hochsiedenden Reststoffe der Direkten Synthese von Organochlor- und/oder Chlorsilanen aufzuarbeiten, wobei die erhaltenen Produkte weiter verwendbar sein sollen.

Überraschenderweise wurde gefunden, daß nach einer alkalischen Aufarbeitung, insbesondere der festen, metallhaltigen und/oder flüssigen, hochsiedenden Reststoffe der Direkten Synthese von Organochlorsilanen ein inerter Feststoff erhalten wird, der sich hervorragend mit anorganischen Materialien homogenisieren und anschließend verpressen läßt.

Erfindungsgemäß werden die Rückstände der Direkten Synthese von Organochlor-und/oder Chlorsilanen nach einer Vorbehandlung entweder sofort getrocknet und/oder gemahlen oder mit Zement, Kalk und/oder Kalkmörtel enthaltenden Materialien vermischt, zu Grünkörpern verdichtet und ggf. ausgehärtet.

Die Vorbehandlung kann alkalisch und/oder sauer im pH-Bereich von 1,0 bis 10,0 erfolgen. Bei einer alkalischen Vorbehandlung sollte ein pH-Wert von 7,5 bis 9, bei einer sauren Vorbehandlung von 1 bis 6 eingehalten werden.

Als Rückstände werden insbesondere die bei der Direkten Synthese von Organochlor- und/oder Chlorsilanen anfallenden festen, metallhaltigen und/oder flüssigen, hochsiedenden Reststoffe eingesetzt, die neben Silicium noch u.a. Eisen, Aluminium, Zink, Calcium und Kupfer sowie mono-, oligo- und polymere Silane, Siloxane und Silmethylene enthalten können.

Das Trocknen der Rückstände kann mechanisch und/oder thermisch erfolgen, beispielsweise durch Lufttrocknung (Entfeuchten), Filtration oder durch Ofentrocknung.

Die erfindungsgemäß aufgearbeiteten Rückstände können als Füll- oder Zusatzstoff in der Bau- und/oder Gießereiindustrie, als Zusatzstoff zu bituminösen Belägen, wie Straßenbelägen oder Dachpappen, zu Schleifmitteln oder zur Herstellung von Legierungen in der Metallurgie sowie als Füllstoff in Dicht- oder Abformmassen verwendet werden. In der Metallurgie, beispielsweise für die Rückgewinnung von Kupfer, sind die erfindungsgemäß aufgearbeiteten Rückstände auch ohne Zusätze, z. B. von Bindemitteln, sofort nach einer teilweisen Entfeuchtung einsetzbar.

Bei Verwendung der erfindungsgemäß aufgearbeiteten Rückstände als Füll- und Zusatzstoff in der Bauindustrie, beispielsweise für Mauer- oder Pflastersteine, wird ein Gew.-Verhältnis von behandelten Rückständen zu Zement, Kalk und/oder Kalkmörtel enthaltenden Materialien von 20 zu 1 bis 4 zu 1, vorzugsweise von 10 zu 1 bis 5 zu 1, gewählt. Das Abmischungsverhältnis der einzelnen Komponenten ist über weite Bereiche frei wählbar. Der Fachmann muß aber gewährleisten, daß die Rückstände, insbesondere die alkalisch vorbehandelten, in einer solchen Konsistenz und mit einer solchen Restfeuchte vorliegen, daß nach Zugabe des anorganischen Füllers, dem Grünkörperfertigen und dem Aushärten der Formkörper, diese eine gebrauchsfähige Festigkeit besitzen. Verwendet man beispielsweise Zyklonstaub und Naßwäscheschlamm aus der Direkten Synthese von Methylchlorsilanen, so ist ein geeignetes Abmischungsverhältnis durch die Anfallmengen gegeben. Eine Erhöhung des Naßwäscheschlammanteils auf 25 Gew.-% der aufzuarbeitenden Reststoffe bringt z .B. im Vergleich zur Vorbehandlung von ausschließlich Zyklonstaub und identischer Formkörperherstellung eine höhere Endfestigkeit der Formkörper und auch eine höhere Aushärtegeschwindigkeit.

Die alkalische Aufarbeitung kann beispielsweise erfolgen durch Umsetzung von wäßriger Alkali-Alkylsiliconatlösung mit den Rückständen im Gew.-verhältnis von kleiner/gleich 1, vorzugsweise von 0,5 zu 1, bei Einhaltung eines pH-Wertes von größer 7, gegebenenfalls unterstützt durch das Einleiten von Luft. Anstatt der alkalisch, wäßrigen Lösung von Alkali-Alkylsiliconat können jedoch auch andere alkalische Verbindungen, wie Alkali- oder Erdalkalihydroxide oder Alkali- oder Erdalkalicarbonate sowie Natron- oder Kalilauge, Kalziumoxid oder -hydroxid, eingesetzt werden. Vorteilhafterweise wird das Gew.-verhältnis von wäßriger Alkali-Alkylsiliconatlösung so gewählt, daß sich nach Abschluß der Umsetzung ein End-pH-Wert von mindestens 4 einstellt. Damit ist es möglich, filtratfrei zu arbeiten und den Feststoff mit einem Mindestwassergehalt von 10 bis 15 Gew.-% zu erhalten.

Unter saurer Aufarbeitung ist die hydrolytische Inertisierung der festen, metallhaltigen und/oder flüssigen , hochsiedenden Rückstände der Direkten Synthese von Organochlor und/oder Chlorsilanen zu verstehen, wobei eine anschließende Neutralisation der durch die Hydrolyse von Si-Cl-bindungen entstehenden Saltzsäure nicht erfolgt.

Sowohl die alkalische als auch die saure Aufarbeitung können nach allen bekannten Verfahren, möglichst unter Einhaltung des vorher beschriebenen pH-Wert-Bereiches, erfolgen.

Von besonderem Vorteil ist, daß überraschenderweise die dem Feststoff nach der hydrolytischen Aufarbeitung anhaftende Restfeuchte von etwa 10 bis 30 Gew.-% für die innige Vermischung und die Herstellung von Form- oder Grünkörpern förderlich ist, wobei eine hohe mechanische Festigkeit sowohl der Grünkörper als auch der unter atmosphärischen Bedingungen und bei Umgebungstemperatur getrockneten Formkörper erreicht wird. Aufgrund der erreichten Festigkeiten kommt es beim Transport und der Verarbeitung nur zu einem geringen Abrieb der hergestellten Formkörper. Bei Kontakt mit Feuchtigkeit bleibt die Druckfestigkeit der Formkörper ebenfalls erhalten.

Die erfindungsgemäß aufgearbeiteten Rückstände der Direkten Synthese von Organochlor- und/oder Chlorsilanen können somit in einfacher und wenig aufwendiger Art und Weise z. B. als Zusatzstoffe in der Bauindustrie (zur Herstellung von Formsteinen oder als Pigmente in Betonen) oder in der Gießereiindustrie bei Nutzung bereits vorhandener technischer Ausrüstungen verwendet werden. Die so hergestellten Stoffgemische sind unter Umgebungsbedingungen inert und zeigen keinerlei exotherme Reaktionen mit Feuchtigkeit und Luftsauerstoff.

Speziell in der Gießereiindustrie werden die erfindungsgemäß aufgearbeiteten Rückständen als Zusatzstoff bei Schmelzprozessen zur Nutzung des Siliciumanteils oder des Kupfergehaltes eingesetzt. So kann z. B. in speziellen Öfen, wie Schachtöfen, durch Zugabe von Reduktionsmitteln und Zuschlagstoffen das in den Rückständen enthaltene Kupfer letztendlich in Form von Elektrolytkupfer zurückgewonnen werden.

Weiterhin können die erfindungsgemäß aufgearbeiteten Rückstände zur Herstellung von Schleifscheiben oder Schleifkörpern verwendet werden. Dabei ist es möglich, den üblicherweise enthaltenen Anteil an Korund, Korundgemischen und/oder Pyrit gänzlich oder teilweise durch die erfindungsgemäß durch Vorbehandlung und anschließendes Trocknen und Mahlen erhaltenen Feststoffe zu ersetzen. Dabei erfolgt keine negative Beeinträchtigung der mechanischen Werte der daraus nach bekannter Technolgie hergestellten Schleifscheiben und -körper oder deren Schleifeigenschaften.

### Ausführungsbeispiele

### Beispiel 1

In einem Rührkolben mit Rührer, Innenthermometer und Rückflußkühler wurden 1600 g Wasser und 400 g Zyklonstaub aus der Direkten Synthese von Methylchlorsilanen während einer Stunde bei einer Temperatur von 60 °C mit 24,2 g einer 50 Gew.-%igen wäßrigen Natronlauge intensiv gerührt.

Der verwendete Zyklonstaub wies folgende Zusammensetzung auf:

| | |
|---|---|
| Methylchlorsilane | 2,0 Gew.-% |
| Kupfer | 14,2 Gew.-% |
| Eisen | 1,7 Gew.-% |
| Aluminium | 1,2 Gew.-% |
| Kohlenstoff | 3,8 Gew.-% |
| Silicium | 56,7 Gew.-% |

Anschließend wurde das Reaktionsgemisch unter Rühren während einer Stunde abgekühlt. Danach erfolgt eine Filtration im Wasserstrahlpumpen-Vakuum.

Der erhaltenen Feststoff wies eine Restfeuchte von 19,3 Gew.-% auf. Er wurde mit 25 Gew.-% Zement vermischt und anschließend bei Raumtemperatur 30 Sekunden mit 180 kp/cm² Preß- und Schließdruck gepreßt. Die mechanische Druckfestigkeit nach dem Pressen betrug 4,4 MPa, nach 3 Tagen Lagerung bei Raumtemperatur > 12,4 MPa.

Zur Prüfung der Inertheit wurde der Feststoff 2 Stunden auf 80 °C erhitzt. Dabei wurde keine exotherme Reaktion beobachtet. Beim Kontakt mit Wasser konnte ebenfalls keine Temperaturerhöhung beobachtet werden.

### Beispiel 2

800 g Wasser und ein Gemisch aus 300 g Zyklonstaub und 100 g Naßwäscheschlamm aus der Direkten Synthese von Methylchlorsilanen (Zyklonstaub-Zusammensetzung analog Beispiel 1) wurden während einer Stunde bei einer Temperatur von 60 °C mit 75,4 g einer 50 Gew.-%igen wäßrigen Natronlauge gerührt. Anschließend wurde das Reaktionsgemisch unter Rühren eine Stunde abgekühlt, danach im Wasserstrahlpumpen-Vakuum filtriert.

Der erhaltene Feststoff wies eine Restfeuchte von 22,6 Gew.-% auf. Er wurde mit 5 Gew.-% Zement vermischt und analog Beispiel 1 gepreßt. Die mechanische Druckfestigkeit nach dem Pressen betrug 6,3 MPa, nach 3 Tagen Lagerung bei Raumtemperatur > 12,2 MPa.

Zur Prüfung der Inertheit wurde der Feststoff 2 Stunden auf 80 °C erhitzt. Dabei wurde keine exotherme Reaktion beobachtet. Beim Kontakt mit Wasser konnte ebenfalls keine Temperaturerhöhung beobachtet werden.

### Beispiel 3

1600 g Wasser und 400 g Zyklonstaub aus der Direkten Synthese von Methylchlorsilanen wurden während einer Stunde bei einer Temperatur von 60 °C mit 65 g einer handelsüblichen Alkali-Methylsiliconatlösung (Contraquin NS 14, Hersteller Chemiewerk Nünchritz GmbH) gerührt. Anschließend wurde das Reaktionsgemisch unter Rühren eine Stunde abgekühlt und danach im Wasserstrahlpumpen-Vakuum filtriert.

Der eingesetzte Zyklonstaub wies folgende Zusammensetzung auf:

| | |
|---|---|
| Methylchlorsilane | 2,2 Gew.-% |
| Kupfer | 2,85 Gew.-% |
| Eisen | 1,33 Gew.-% |
| Aluminium | 0,22 Gew.-% |
| Kohlenstoff | 0,97 Gew.-% |
| Silicium | 86,20 Gew.-% |

Der so hergestellte Feststoff wies eine Restfeuchte von 19,5 Gew.-% auf. Er wurde mit 10 Gew.-% Zement vermischt und analog Beispiel 1 gepreßt. Die mechanische Druckfestigkeit betrug nach 10 Tagen Lagerung bei Raumtemperatur 4,9 MPa.

### Beispiel 4

1600 g Wasser und 400 g Zyklonstaub aus der Direkten Synthese von Methylchlorsilanen (Zusammensetzung analog Beispiel 3) wurden während einer Stunde bei einer Temperatur von 60 °C mit 62,6 g einer 20 Gew.-%igen wäßrigen Kalkmilch gerührt. Anschließend wurde das Reaktionsgemisch unter Rühren 1 Stunde abgekühlt, danach im Wasserstrahlpumpen-Vakuum filtriert.

Der erhaltene Feststoff wies eine Restfeuchte von 26,7 Gew.-% auf. Er wurde mit 10 Gew.-% Zement vermischt und anaolg Beispiel 1 gepreßt. Die mechanische Druckfestigkeit betrug nach 7 Tagen Lagerung bei Raumtemperatur 1,8 MPa.

### Beispiel 5

1200 g Wasser und ein Gemisch aus 450 g Zyklonstaub und 150 g Naßwäscheschlamm aus der Direkten Synthese von Methylchlorsilanen wurden während einer Stunde bei einer Temperatur von 60 °C gemeinsam mit 110,4 g einer 50 Gew.-%igen wäßrigen Natronlauge gerührt. Anschließend wurde unter Rühren eine Stunde abgekühlt und im Wasserstrahlpumpen-Vakuum der Feststoff abfiltriert.

Der eingesetzte Zyklonstaub wies folgende Zusammensetzung auf:

| | |
|---|---|
| Methylchlorsilane | 1,8 Gew.-% |
| Kupfer | 3,44 Gew.-% |
| Eisen | 1,20 Gew.-% |
| Aluminium | 0,27 Gew.-% |
| Kohlenstoff | 0,98 Gew.-% |
| Silicium | 92,40 Gew.-% |

Die Restfeuchte des erhaltenen Feststoffes wurde auf 25 Gew.-% eingestellt. Er wurde innig mit 20 Gew.-% Kalk vermischt und analog Beispiel 1 gepreßt. Die mechanische Druckfestigkeit betrug nach 7 Tagen Lagerung bei Raumtemperatur 10,4 MPa.

### Beispiel 6

2000 g Wasser und ein Gemisch aus 470 g Zyklonstaub (Zusammensetzung analog Beispiel 5) und 250 g Naßwäscheschlamm aus der Direkten Synthese von Methylchlorsilanen wurden während einer halben Stunde bei 60 °C gerührt, anschließend unter Rühren eine Stunde abgekühlt und im Wasserstrahlpumpen-Vakuum der Feststoff abfiltriert. Der erhaltene Feststoff wies eine Restfeuchte von 25,4 Gew.-% auf. Er wurde mit 20 Gew.-% Zement vermischt und analog Beispiel 1 verpreßt. Die mechanische Druckfestigkeit betrug nach 7 Tagen Lagerung bei Raumtemperatur > 12,4 MPa. Bei der Behandlung des Preßkörpers mit Wasser kam es zu einem geringen Temperaturanstieg auf ca. 35 °C.

### Beispiel 7

In eine Mischung aus 70 Gew.-Teilen α,ω-Dihydroxypolydimethylsiloxan einer Viskosität von 5000 mPas und 30 Gew.-Teilen α,ω-Bis-trimethylsiloxypolydimethylsiloxan wurden bei Raumtemperatur 11 Gew.-Teile eines Gemisches aus Methyl- und Ethyltriacetoxysilan (Gew.-Verhältnis 60 zu 40) eingerührt. Danach wurden 40 Gew.-Teile gefälltes Calciumcarbonat und 40 Gew.-Teile erfindungsgemäß aufgearbeiteter, getrockneter und gemahlener Reststoff der Direkten Synthese von Methylchlorsilanen zugegeben und die Gesamtmischung homogenisiert. Die erhaltene Masse wurde abschließend unter Vakuum 10 min. gerührt und konnte in Tuben oder Kartuschen abgefült werden.

Das erhaltene Produkt härtete an der Luft gleichmäßig und gut durch. Es wies eine Shore-A-Härte von 31, eine Zugfestigkeit von 1,0 MPa und eine Bruchdehnung von 270 % auf.

## Patentansprüche

1. Aufarbeitung und Verwendung der Rückstände der Direkten Synthese von Organochlor- und/oder Chlorsilanen, dadurch gekennzeichnet, daß die Rückstände nach einer Vorbehandlung entweder sofort getrocknet und/oder gemahlen oder mit Zement, Kalk und/oder Kalkmörtel enthaltenden Materialien vermischt, zu Grünkörpern verdichtet und ggf. ausgehärtet werden.

2. Aufarbeitung nach Anspruch 1, dadurch gekennzeichnet, daß die Rückstände unter Einhaltung eines pH-Wertes von 1,0 bis 10,0 aufgearbeitet werden.

3. Aufarbeitung nach Anspruch 1, dadurch gekennzeichnet, daß die Rückstände alkalisch unter Einhaltung eines pH-Wertes von 7,5 bis 8,5 vorbehandelt werden.

4. Aufarbeitung nach Anspruch 1, dadurch gekennzeichnet, daß die Rückstände sauer unter Einhaltung eines pH-Wertes von 1,0 bis 6,0 vorbehandelt werden.

5. Aufarbeitung nach Anspruch 1, dadurch gekennzeichnet, daß als Rückstände der Direkten Synthese von Organochlor- und/oder Chlorsilanen die festen, metallhaltigen und/oder flüssigen, hochsiedenden Reststoffe eingesetzt werden.

6. Aufarbeitung nach Anspruch 1, dadurch gekennzeichnet, daß das Gew.-Verhältnis von behandelten Rückständen zu Zement, Kalk und/oder Kalkmörtel enthaltenden Materialien 20 zu 1 bis 4 zu 1 beträgt.

7. Aufarbeitung nach Anspruch 6, dadurch gekennzeichnet, daß das Gew.-Verhältnis von behandelten Rückständen zu Zement, Kalk und/oder Kalkmörtel enthaltenden Materialien 10 zu 1 bis 5 zu 1 beträgt.

8. Aufarbeitung nach Anspruch 1, dadurch gekennzeichnet, daß das Trocknen der Rückstände an der Luft, durch Energiezufuhr, durch Pressen und/oder durch Absaugen des Wassers erfolgt.

9. Verwendung der Rückstände nach Anspruch 1 als Füll- oder Zusatzstoff in der Bau- und/oder Gießereiindustrie.

10. Verwendung der Rückstände nach Anspruch 1 als Zusatzstoff zu bituminösen Belägen.

11. Verwendung der Rückstände nach Anspruch 1 als Zusatzstoff zu Schleifmitteln.

12. Verwendung der Rückstände nach Anspruch 1 als Füllstoff in Dicht- oder Abformmassen.

13. Verwendung der Rückstände nach Anspruch 1 als Zusatzstoff für die Herstellung von Legierungen in der Metallurgie.
